# EUROPEAN PATENT APPLICATION

(11) **EP 4 585 516 A2**
(43) Date of publication of application: **16.07.2025**
(21) Application number: 25151063.2
(22) Date of filing: 09.01.2025
(51) Int. Cl.: B64D 13/00, B64D 13/08

(54) **VENTILATION SYSTEM INCLUDING SELF-INSULATED AIR GASPERS**

(30) Priority: 12.01.2024 IN 202411002592; 26.12.2024 US 202419002111
(71) Applicant: B/E Aerospace, Inc., Winston-Salem, NC 27105 (US)
(72) Inventor: HORRELL, Michael, Lewisville, 27023 NC (US); DALTON, Tony, Statesville, 28625 NC (US); LAMING, Ross J., High Point, 27265 NC (US); SULA, Mark Douglas, Thomasville, 27360 NC (US); AVELINE, Charles, Greensboro, 27410 NC (US); SIVANANACHAPERUMAL, Ananthkumar, Hyderabad, 500043 (IN); KRISHNAMOORTHY, Shivaprasad, Hyderabad (IN)
(74) Representative: Dehns

(57) **Abstract**

A self-insulated air gasper (108, 116, 118, 120, 122) and a ventilation system (100) including a series arrangement of air gaspers. In embodiments, each air gasper is manufactured to include a double wall configuration including inner and outer walls (146, 148) spaced apart to trap air or other insulative material. In embodiments, a series of air gaspers include a through passage (112) and take-off duct (114) for delivering air to an environment, for instance a passenger suite (200) in an aircraft or other confined space. Each air gasper may further include a foraminous restrictor (144) positioned at the terminal end of the duct outlet. In use, hose connections (110, 124, 126, 128, 130, 134) may be wrapped with insulative covering whereas the self-insulative feature of the air gaspers obviates the need for external insulative wrapping.

## Description

### TECHNICAL FIELD

The present disclosure relates generally to environmental control systems for aircraft and other conveyances, and more particularly, to a ventilation system including self-insulated air gaspers for ventilating confined spaces such as passenger suites.

### BACKGROUND

Aircraft and other conveyances include environmental control systems for controlling the temperature and flow of air in the passenger cabin. In large open spaces such as economy seating classes, air flow may be controlled broadly using passive systems, and individually using eyeball gaspers positioned overhead in passenger service units. In confined spaces such as individual passenger suites, specialized ventilation solutions are required to distribute air evenly along the space to ensure a consistent temperature. An additional consideration, applicable to all spaces in a passenger cabin, is the ability to deliver air quietly to help maintain a low noise level.

One approach to ventilating passenger suites is to supply air flow to a plurality of spaced ducts located in the suite walls, wherein each duct serves to distribute air to a different section of the suite. Considering the low temperature of the supply air, ducts and their associated hoses must be thermally insulated. At present, insulation is achieved by wrapping the ducts and hoses with separate insulation materials (e.g., polyimide foam and glass wool). In aircraft, packaging space in the walls is limited, separate insulation adds weight, and complex geometries require customized wrapping solutions.

Advancements in additive manufacturing technologies now allow objects to be built with complex geometries. Known to those skilled in the art, additive manufacturing is a process whereby material is selectively solidified via laser light, by bonding or fusing granules, by extruding a bead of thermoplastic, etc., to produce a three-dimensional (3D) object. Material is typically deposited and hardened in successive layers under computer control and according to a 3D computer-aided design (CAD) model. Software operates to convert the model into a series of thin successive layers, and apparatus settings and vectors are generated for controlling the creation of each of the subsequent layers. Considering the advancements in additive manufacturing technologies, it would therefore be desirable to provide an integral insulation solution for built ventilation system parts that eliminate the need for separate insulation wrappings.

### SUMMARY

In one aspect, embodiments of the inventive concepts disclosed herein are directed to a ventilation system including an inlet restrictor having an inlet and an outlet, the inlet configured to be coupled to a hose for supplying air to the inlet restrictor, an air gasper including a through passage having an inlet and an outlet, and a spiral duct fluidly coupled to the through passage, and a terminal air gasper having an inlet fluidly coupled to a duct. In embodiments, a first hose section fluidly couples the inlet restrictor and the air gasper, and a second hose section fluidly couples the air gasper and the terminal air gasper. In embodiments, insulation substantially surrounds each of the first and second hose sections. In embodiments, each of the through passage of the air gasper, the duct of the air gasper, and the duct of the terminal air gasper has a double wall configuration including spaced apart inner and outer walls.

In some embodiments, the inlet restrictor, the air gasper, and the terminal air gasper are arranged in series.

In some embodiments, the inlet restrictor may include internal geometric features configured to provide a high-pressure zone for supply to an eyeball gasper while simultaneously lowering delivery pressure to downstream air gaspers.

In some embodiments, the air gasper and the terminal air gasper are additively manufactured.

In some embodiments, at least one opening for extracting build material is provided in the outer wall of each of the through passage of the air gasper, the duct of the air gasper, and the duct of the terminal air gasper.

In some embodiments, the ventilation system further includes at least one additional air gasper and at least one additional hose section positioned in-line between the air gasper and the terminal air gasper, wherein the through passage and the duct of the at least one additional air gasper has a double wall configuration including spaced apart inner and outer walls.

In some embodiments, the spiral duct of the at least one additional air gasper is volumetrically smaller than the duct of the air gasper.

In some embodiments, ventilation system further includes a foraminous restrictor positioned at a terminal end of the spiral duct of the air gasper, and at a terminal end of the duct of the terminal air gasper.

In some embodiments, the inlet restrictor includes a take-off outlet configured to be fluidly coupled to an eyeball gasper.

In another aspect, embodiments of the inventive concepts disclosed herein are directed to a ventilation system for ventilating a passenger suite in an aircraft. In embodiments, the ventilation system includes an inlet restrictor having an inlet and an outlet, the inlet configured to be coupled to a hose for supplying air to the inlet restrictor, a series arrangement of a plurality of air gaspers fluidly coupled at an upstream end to the inlet restrictor, each of the air gaspers including a through passage and a take-off duct fluidly coupled to the through passage, and a terminal air gasper fluidly coupled to a downstream end of the in-line arrangement of the plurality of air gaspers, the terminal air gasper having an inlet fluidly coupled to a duct. In embodiments, a plurality of hose sections are connected between the inlet restrictor, adjacent ones of the plurality of air gaspers, and the terminal air gasper, and insulative wrapping is provided around each of the plurality of hose sections. In embodiments, the through passages of the plurality of air gaspers, the tangential ducts of the plurality of air gaspers, and the duct of the terminal air gasper each have a double wall configuration including spaced apart inner and outer walls.

In another aspect, embodiments of the inventive concepts disclosed herein are directed to a ventilation system for ventilating a passenger suite in an aircraft, the ventilation system comprising an inlet restrictor having an inlet and an outlet, the inlet configured to be coupled to a hose for supplying air to the inlet restrictor. The system comprises a plurality of air gaspers, arranged in series and positioned downstream of the inlet restrictor, one of the plurality of air gaspers fluidly coupled at an upstream end thereof to the inlet restrictor, and each of the plurality of air gaspers including a through passage and a duct fluidly coupled to the through passage. The system further comprises a terminal air gasper fluidly coupled to one end of the plurality of air gaspers, the terminal air gasper including a duct. The system further comprises a plurality of hose sections including a first hose section connected between the inlet restrictor and one of the plurality of air gaspers, hose sections connected between adjacent ones of the plurality of air gaspers downstream of the air gasper fluidly coupled to the inlet restrictor, and a hose section connected between one of the plurality of air gaspers and the terminal air gasper. The system further comprises insulation wrapping around each of the plurality of hose sections. The through passages of the plurality of air gaspers and the take-off ducts of the plurality of air gaspers each have a double wall configuration including spaced apart inner and outer walls.

In some embodiments, the plurality of air gaspers may be each manufactured by an additive manufacturing process.

In some embodiments, at least one opening for extracting additive manufacturing support material may be formed in the outer wall of each of the through passage of the plurality of air gaspers, and the duct of the plurality of air gaspers.

In some embodiments, duct sizing may decrease volumetrically in a direction of the downstream end of the series arrangement of the plurality of air gaspers.

In some embodiments, each duct may have a helical shape.

In some embodiments, the ventilation system may comprise a foraminous restrictor positioned at a terminal end of each duct.

In some embodiments, the inlet restrictor may comprise a take-off outlet configured to be fluidly coupled to an eyeball gasper.

In a further aspect, embodiments of the inventive concepts disclosed herein are directed to a self-insulated air gasper including a through passage having an inlet and an outlet, and a spiral duct having a take-off inlet fluidly coupled to the through passage, and an outlet, wherein each of the through passage and the spiral duct has a double wall configuration including spaced apart inner and outer walls.

In some embodiments, the self-insulated air grasper may comprise a foraminous restrictor positioned at the outlet of the spiral duct.

In some embodiments, the self-insulated air gasper may be manufactured by an additive manufacturing process.

In some embodiments, the self-insulated air grasper may comprise at least one opening formed in the outer wall of each of the through passage and the spiral duct configured to extract support material following the additive manufacturing process.

In some embodiments, the spiral duct may expand volumetrically in a direction of the outlet of the spiral duct.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is an isometric view of a ventilation system including self-insulated air gaspers, in accordance with example embodiments of this disclosure;
FIG. 2 is an exploded view of the ventilation system of FIG. 1 shown with in-line hoses removed for clarity;
FIG. 3 is an isometric view of an inlet restrictor component of the ventilation system, in accordance with example embodiments of this disclosure;
FIG. 4 is a front view of an air gasper component of the ventilation system, in accordance with example embodiments of this disclosure;
FIG. 5 is a top view of the air gasper component shown in FIG. 4 illustrating air flow through the air gasper component, in accordance with example embodiments of this disclosure;
FIG. 6 is an end view of the air gasper component shown in FIG. 4 illustrating air flow through the air gasper component, in accordance with example embodiments of this disclosure;
FIG. 7 is a front view of a terminal air gasper component of the ventilation system, in accordance with example embodiments of this disclosure;
FIG. 8 is an isometric view of an air gasper component of the ventilation system illustrating a self-insulated duct and openings formed in the outer wall for additive manufacturing support material extraction and manufacture, in accordance with example embodiments of this disclosure;
FIG. 9 is a vertical cross-section of the air gasper shown in FIG. 8 illustrating self-insulating features of the gasper outlet, in accordance with example embodiments of this disclosure;
FIG. 10 is a horizontal cross-section of the air gasper shown in FIG. 8 illustrating self-insulating features of the gasper thru-passage, in accordance with example embodiments of this disclosure; and
FIG. 11 is a top plan view showing the ventilation system of FIG. 1 in the context of an aircraft passenger suite.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to ventilation systems including air gaspers configured to direct air to an interior space, for instance a passenger suite in an aircraft cabin. In embodiments, a plurality of air gaspers may be connected to form an in-line arrangement configured to deliver air along an interior space. In embodiments, an upstream end of the in-line arrangement is fluidly coupled to an inlet restrictor further coupled to an air supply, and a downstream end of the in-line arrangement includes a terminal air gasper. In embodiments, the first and subsequent air gaspers each include a through passage for flowing air downstream, and a duct branching from the fluid passage for exiting air from the ventilation system.

In embodiments, connecting components of the ventilation system, such as sections of hose having a cylindrical geometry, may be wrapped with insulative material whereas the air gaspers themselves may be self-insulated to eliminate the need for insulative wrapping components with complex geometries. In embodiments, self-insulative properties may be provided by configuring the air flow passages of the air gaspers with a double wall including an interior wall and exterior wall spaced apart to form a gap therebetween for 'trapping' air. In use, air 'trapped' between the interior and exterior walls function to impart insulative properties for the relatively cold air flowing through the ventilation system from the ambient environment outside of the ducted air. In embodiments, each air gasper may be built by an additive manufacturing process to facilitate forming the double wall configuration.

Some advantages of the ventilation system according to the present disclosure include, but are not limited to, a smaller package profile as compared to ducting including comprehensive insulative wrappings, the ability to manufacture complex parts, reduced weight, and air duct noise reduction.

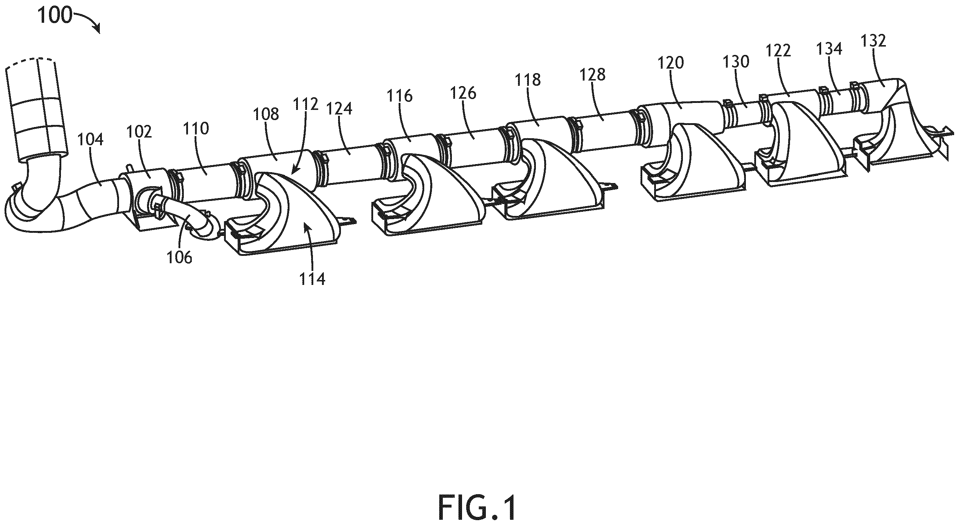

FIG. 1 illustrates a ventilation system 100 according to an embodiment of the present disclosure. The system generally includes an inlet restrictor 102 positioned at an 'upstream' end of the system. The inlet restrictor 102 generally includes a through passage having an inlet and an outlet. The inlet is configured to be coupled to a supply line, for instance a hose 104, configured to deliver air to the inlet restrictor 102 from an environmental control system (ECS), for instance in an aircraft. In embodiments, the inlet restrictor 102 includes a cylindrical through passenger fluidly coupled to a take-off outlet 106 configured to be fluidly coupled to a further device, for instance an adjustable eyeball gasper positioned in the same environment in which the ventilation system 100 is installed. In embodiments, the outlet 106 may include a hard connection for interfacing with a flexible hose.

A first air gasper 108 is positioned downstream of the inlet restrictor 102. In embodiments, a length of hose 110 or other connecting member connects and fluidly couples an outlet of the inlet restrictor 102 to an inlet of the first air gasper 108. Insulative wrapping may be provided to substantially surround and insulate the hose 110. The first air gasper 108 generally includes a through passage 112 for directing air further downstream, and a duct 114 (e.g., take-off duct) fluidly coupled to and branching from the through passage 112 for directing air out of the ventilation system 100 and into the interior space. As discussed in detail below, the duct 114 may have a spiral, for instance a helical, configuration to divert air from the through passage 112 in a directed, non-turbulent, and expansive manner.

Second and additional air gaspers 116, 118, 120, 122 are arranged in series (e.g., in-line) further downstream. Each of the second and additional air gaspers 116, 118, 120, 122 each also include a through passage 112 for directing air further downstream, and a duct 114 fluidly coupled to and branching from the through passage 112 for directing air out of the ventilation system 100 and into the interior space. Each duct 114 may also have a spiral or helical configuration to divert air from the through passage 112 in a directed, non-turbulent, and expansive manner. Each of the second and additional air gaspers 116, 118, 120, 122 includes an inlet and an outlet that are coupled to additional hoses 124, 126, 128, 130, 134 connected to and fluidly coupling outlets to inlets of the respective air gaspers 116, 118, 120, 122. As such, hose lengths may be predefined and customized to determine the spacing between adjacent air gaspers. For example, a relatively short hose length may be used to position adjacent air gaspers in close proximity, whereas a relatively long hose length may be used to space adjacent air gaspers further apart. In some embodiments, a relatively long and flexible length of house may be used to form an angle between adjacent air gaspers, for example, to route the ventilation system 100 along two adjacent walls or otherwise make a turn.

In embodiments, the ventilation system 100 includes an inlet restrictor 102, at least one air gasper 108, and a terminal air gasper 132 connected and fluidly coupled by an additional hose section 134. The configuration of the terminal air gasper 132 differs from the upstream air gaspers in that the terminal air gasper 132 is not required to include a through passage, as there are presumably no further downstream air gaspers. In some embodiments, an upstream air gasper may be used as the terminal air gasper wherein the outlet of the through passage is plugged. As shown, the ventilation system 100 includes six air gaspers in total, although the number is arbitrary and a greater or lesser number of air gaspers may be connected depending on the application and air flow demands.

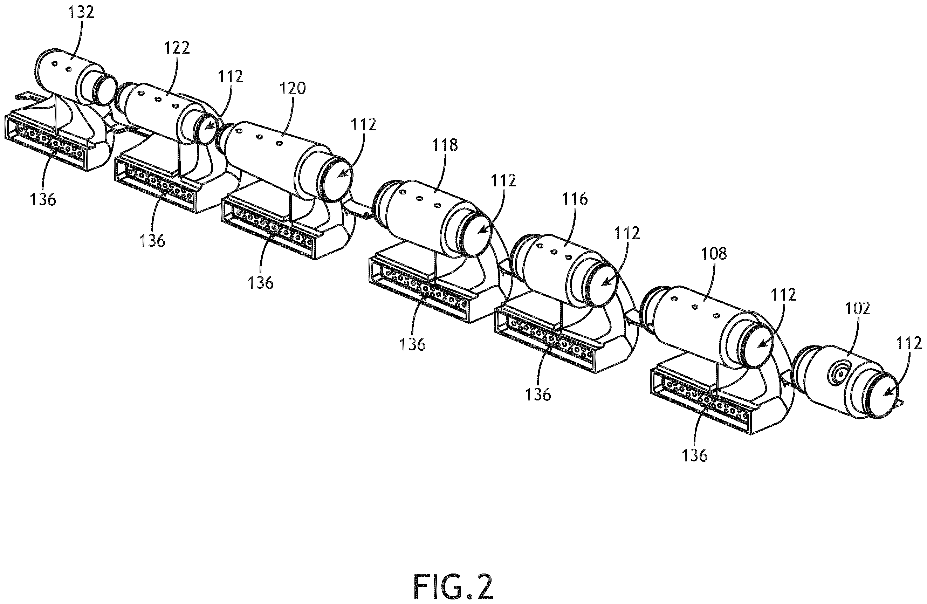

FIG. 2 shows a particular configuration of air gaspers, arranged in series, wherein the first or most 'upstream' air gasper 108 has a predefined volume for its respective through passage 112, for instance consistent with the through passage 112 of the inlet restrictor 102, each of the second and third air gaspers 116, 118 continue with the a predefined volumetric through passage 112, the fourth air gasper 120 has a tapering through passage 112, the fifth air gasper 122 has a reduced volumetric through passage 112 consistent with the outlet diameter of the fourth air gasper 120, and the terminal air gasper 132 has an inlet opening consistent with the outlet diameter of the fifth air gasper 122. In embodiments, the through passage 112 formed by the interconnected air gaspers, may taper in a direction of the downstream end considering the lesser volume of air to be distributed at the downstream end as compared to the flowing air handled at the upstream end. In addition to the through passages 112, the outlets 136 of the various ducts 114 may be volumetrically customized depending on the volume of air configured to flow therethrough. In embodiments, the through passages of the interconnected air gaspers may be sized to decrease in terms of volumetric flow through the system as air is delivered to the environment past each outlet.

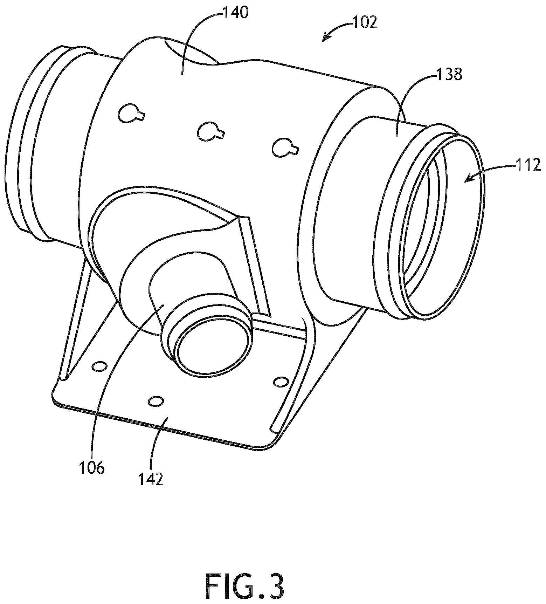

FIG. 3 illustrates the inlet restrictor 102 according to an exemplary embodiment of the present disclosure. As shown, the inlet restrictor 102 generally includes an elongated cylindrical member 138 defining the through passage 112. The cylindrical member 138 may be disposed within a cylindrical sleeve 140, or the two components may be integrally formed, having a mounting feature 142 for securing the inlet restrictor 102 in place in the installation environment. In embodiments, the outlet 106 may be a take-off outlet extending generally in the upstream or downstream direction. In embodiments, the inlet restrictor 102 may include internal geometry configured to simultaneously provide a high-pressure zone for air delivery to outlet 106, and a low-pressure zone for downstream air gaspers along through passage 112.

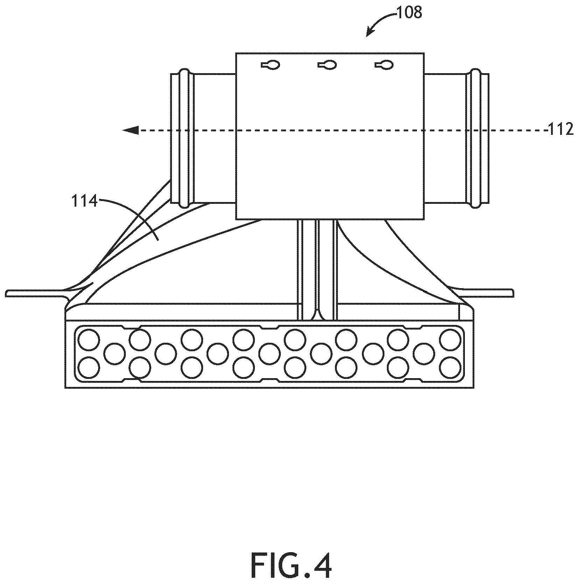

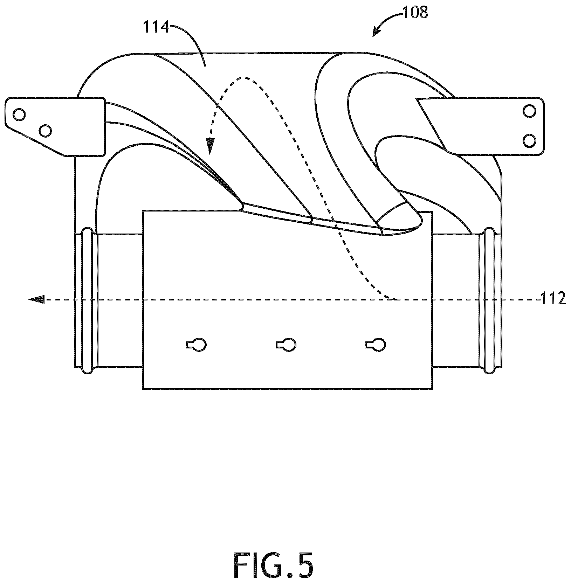

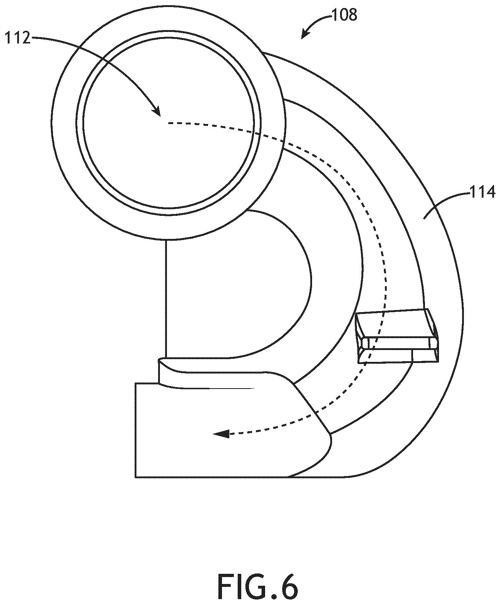

FIGS. 4-6 illustrate a non-limiting example of one of the air gaspers, for instance the most upstream air gasper 108. Air, for instance conditioned or unconditioned air, is configured to flow through the flow passage 112 in the direction from upstream to downstream. A portion of the flowing air is configured to be directed to a take-off inlet of the spiral duct 114. The air is directed such that the air exiting the through passage 112 is transitioned through a gradual curvature to slow the velocity of the flowing air. The duct 114, from its inlet to its outlet, expands volumetrically to further slow the velocity of the diverted air such that the air is delivered through the outlet 136 with little to minimal velocity to minimize noise. At the same time, the direction of the outflowing air is transitioned from in-line to traverse such that the airflow out of the ventilation system in a direction generally perpendicular to the in-line flow. The exit angle of the duct 114 and the shape and volumetric expansion of the duct 114 may be customized per the application.

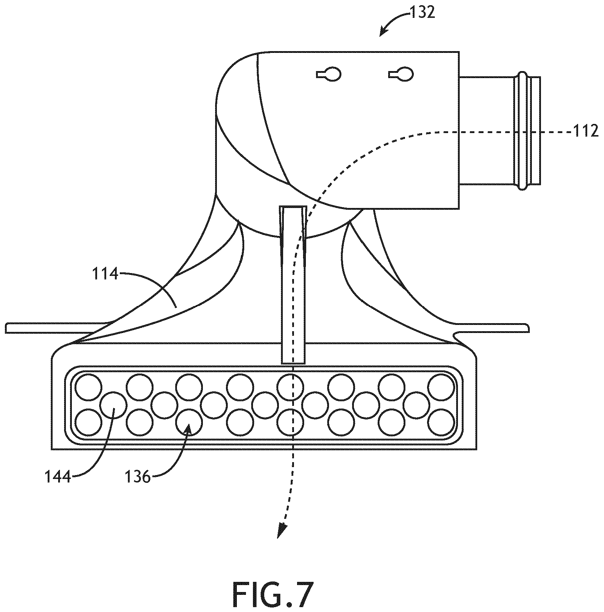

FIG. 7 illustrates a non-limiting example of the terminal air gasper 132. Air, for instance conditioned or unconditioned air, is configured to flow through the flow passage 112 in the direction from upstream to downstream until the flowing air ultimately exits through the terminal air gasper 132. The air is directed such that the air entering the inlet of the terminal air gasper 132 is transitioned through a gradual curvature to slow the velocity of the flowing air. The duct 114, from its inlet to its outlet, also expands volumetrically to further slow the velocity of the flowing air such that the air is ultimately delivered out through the outlet 136 with little to minimal velocity to minimize noise. At the same time, the direction of the outflowing air is transitioned from in-line to traverse such that the air flow out of the ventilation system in a direction generally perpendicular to the in-line flow. The exit angle of the duct 114 and the shape and volumetric expansion of the duct 114 may be customized per the application.

FIGS. 4 and 7 further illustrates a foraminous restrictor 144 configured to be positioned at the exit of the duct 114. In embodiments, the foraminous restrictor 144 may be a separate and customizable piece in terms of the number of openings, opening pattern, opening diameter, etc., configured to divide, diffuse, and control the flow of exiting air. Customizable foraminous restrictors 144 may be utilized with one or more of the air gaspers.

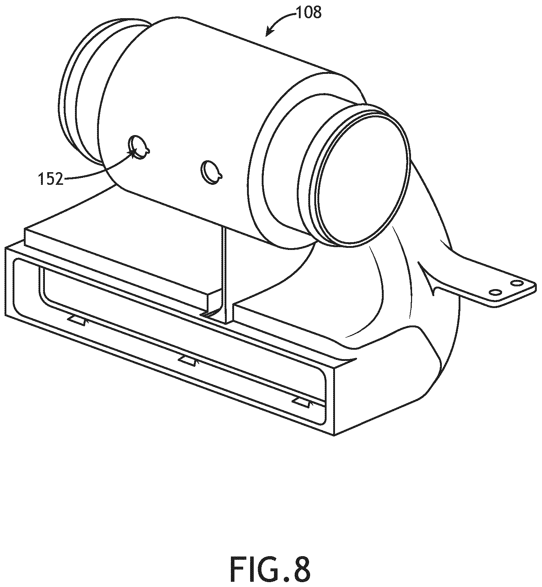

FIG. 8 illustrates a non-limiting example of an air gasper, for instance the most upstream air gasper 108, manufactured by an additive manufacturing process known to those skilled in the art. In embodiments, each air gasper of the ventilation system, and in embodiments also the inlet restrictor, may be additively manufactured to produce a double wall configuration thereby providing an air gap serving as an insulative element.

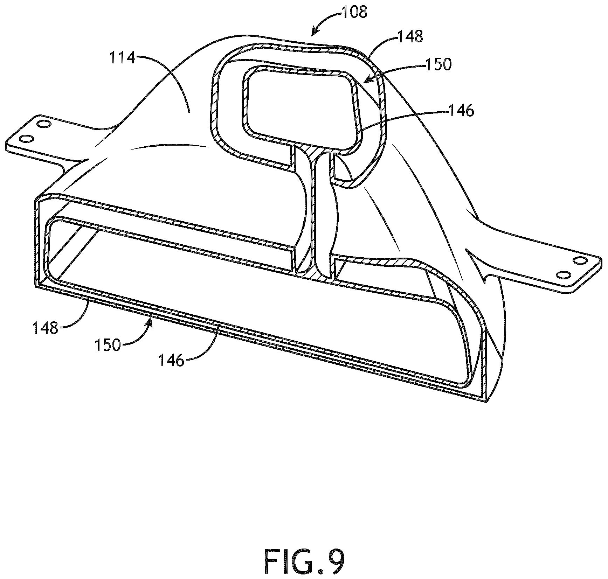

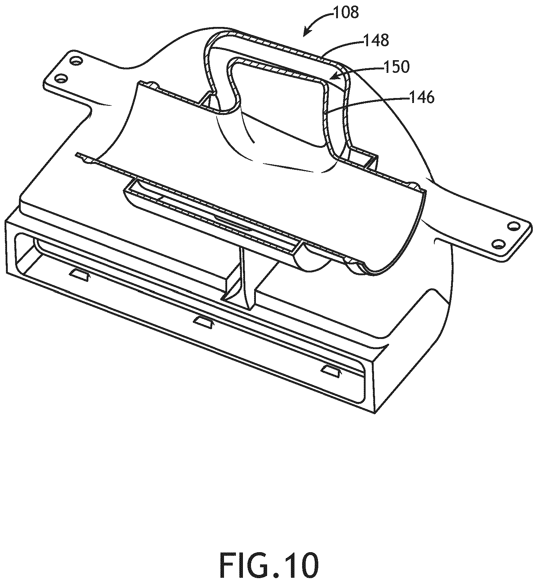

FIGS. 9 and 10 illustrate respective vertical and horizontal cross-sections of the air gasper 108 built to have a double wall configuration. In embodiments, one or more of the through passage 112 and the duct 114 may be built with a double wall configuration. In embodiments, each double wall includes an inner wall 146 and an outer wall 148 spaced apart to form an annulus 150 therebetween configured to be occupied by 'trapped' air. Air is known to be an efficient and lightweight thermal insulator. The distance between the inner and outer walls 146,148 may be customized based on the anticipated temperature difference between the flowing air inside the duct 114 and the ambient air surrounding the outer wall 148. In further embodiments, the annulus 150 formed between the inner and outer walls may be occupied with an insulative material, for instance a spacer mesh produced according to the additive manufacturing process or a separate material introduced post build. As shown in FIG. 8, and also in various other figures, openings 152 may be provided in the outer wall 148 for extracting build material post manufacturing.

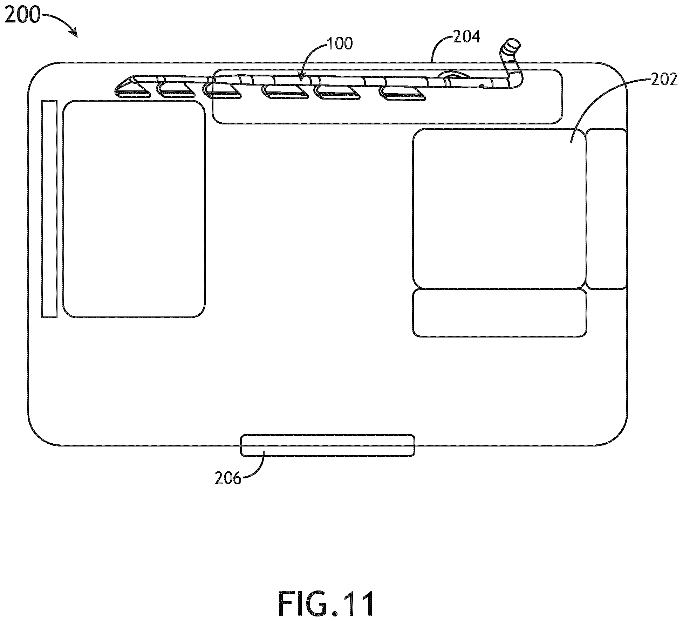

FIG. 11 illustrate the ventilation system 100 for moving air in the context of a confined space, for instance an aircraft passenger suite 200. As shown, the suite 200 includes a passenger seat 202 positioned along one wall, the ventilation system 100 positioned in the fuselage wall 204 generally overhead, and across from the suite door 206. In use, the ventilation system 100 distributes air, conditioned or otherwise, along the length of the suite 200 in a manner which produces a circulating air flow to eliminate hot and cold spots.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A ventilation system (100) for ventilating a passenger suite (200) in an aircraft, the ventilation system comprising:
an inlet restrictor (102) having an inlet and an outlet, the inlet configured to be coupled to a hose (104) for supplying air to the inlet restrictor;
a plurality of air gaspers (108, 116, 118, 120, 122), arranged in series and positioned downstream of the inlet restrictor, one of the plurality of air gaspers (108) fluidly coupled at an upstream end thereof to the inlet restrictor, and each of the plurality of air gaspers including a through passage (112) and a duct (114) fluidly coupled to the through passage;
a terminal air gasper (132) fluidly coupled to one end of the plurality of air gaspers, the terminal air gasper including a duct (114); and
a plurality of hose sections including a first hose section (110) connected between the inlet restrictor and one of the plurality of air gaspers, hose sections (124, 126, 128, 130) connected between adjacent ones of the plurality of air gaspers downstream of the air gasper fluidly coupled to the inlet restrictor, and a hose section (134) connected between one of the plurality of air gaspers and the terminal air gasper; and
insulation wrapping around each of the plurality of hose sections;
wherein the through passages of the plurality of air gaspers and the take-off ducts of the plurality of air gaspers each have a double wall configuration including spaced apart inner and outer walls (146, 148).

2. The ventilation system of claim 1, wherein the plurality of air gaspers are each manufactured by an additive manufacturing process.

3. The ventilation system of claim 2, wherein at least one opening (152) for extracting additive manufacturing support material is formed in the outer wall of each of the through passage of the plurality of air gaspers, and the duct of the plurality of air gaspers.

4. The ventilation system of claim 1, 2 or 3, wherein duct sizing decreases volumetrically in a direction of the downstream end of the series arrangement of the plurality of air gaspers.

5. The ventilation system of any preceding claim, wherein each duct has a helical shape.

6. The ventilation system of any preceding claim, further comprising a foraminous restrictor (144) positioned at a terminal end of each duct.

7. The ventilation system of any preceding claim, wherein the inlet restrictor comprises a take-off outlet (106) configured to be fluidly coupled to an eyeball gasper.

8. A self-insulated air gasper (108, 116, 118, 120, 122), comprising:
a through passage (112) having an inlet and an outlet; and
a spiral duct (114) having a take-off inlet fluidly coupled to the through passage, and an outlet;
wherein each of the through passage and the spiral duct has a double wall configuration including spaced apart inner and outer walls (146, 148).

9. The self-insulated air gasper of claim 8, further comprising a foraminous restrictor (144) positioned at the outlet of the spiral duct.

10. The self-insulated air gasper of claim 8 or 9, wherein the self-insulated air gasper is manufactured by an additive manufacturing process.

11. The self-insulated air gasper of claim 10, further comprising at least one opening (152) formed in the outer wall of each of the through passage and the spiral duct configured to extract support material following the additive manufacturing process.

12. The self-insulated air gasper according to any of claims 8 to 12, wherein the spiral duct expands volumetrically in a direction of the outlet of the spiral duct.
